(19) Europäisches Patentamt
European Patent Office
Office européen des brevets

(11) **EP 1 592 948 B1**

(12) **EUROPÄISCHE PATENTSCHRIFT**

(45) Veröffentlichungstag und Bekanntmachung des Hinweises auf die Patenterteilung:
**10.12.2008   Patentblatt 2008/50**

(51) Int Cl.:
*G01D 4/00* (2006.01)   *G01K 17/06* (2006.01)
*F24D 19/10* (2006.01)

(21) Anmeldenummer: **04710005.2**

(22) Anmeldetag: **11.02.2004**

(86) Internationale Anmeldenummer:
**PCT/EP2004/001241**

(87) Internationale Veröffentlichungsnummer:
**WO 2004/072596 (26.08.2004 Gazette 2004/35)**

(54) **VERFAHREN ZUR PARAMETRIERUNG EINES HEIZKOSTENVERTEILERS**

METHOD FOR PARAMETERISING A HEATING COST DISTRIBUTOR

PROCEDE POUR PARAMETRER UN REPARTITEUR DE FRAIS DE CHAUFFAGE

(84) Benannte Vertragsstaaten:
**AT BE BG CH CY CZ DE DK EE ES FI FR GB GR HU IE IT LI LU MC NL PT RO SE SI SK TR**

(30) Priorität: **14.02.2003   DE 10306465**

(43) Veröffentlichungstag der Anmeldung:
**09.11.2005   Patentblatt 2005/45**

(73) Patentinhaber: **Siemens Building Technologies AG**
**8008 Zürich (CH)**

(72) Erfinder: **LEIPOLD, Jörg**
**99974 Mühlhausen (DE)**

(74) Vertreter: **Weise, Wolfgang**
**Postfach 22 16 34**
**80506 München (DE)**

(56) Entgegenhaltungen:
**EP-A- 0 990 882       EP-A- 1 376 084**
**DE-A- 10 065 833      US-A- 4 455 095**
**US-A- 5 646 858**

**Beschreibung**

Die Erfindung betrifft gemäss dem Oberbegriff des Anspruchs 1 ein Verfahren zur Parametrierung eines Heizkostenverteilers. Ferner betrifft die Erfindung auch eine Verwendung eines gemäss dem erfindungsgemäßen Verfahren parametrierten Heizkostenverteilers in einer Abrechnungseinheit zur Verbrauchswerterfassung.

Heizkostenverteiler sind registrierende Messgeräte, für die über die Zeit integrierte Temperatur. Die Temperatur dient zur Bestimmung der Wärmeabgabe der Raumflächen, an denen die Heizkostenverteiler beispielsweise montiert sind. Die Verbrauchswerterfassung erfolgt hierbei in einer Abrechnungseinheit. Die Norm DIN EN 834 definiert hierbei die Mindestanforderungen die an die Konstruktion, das Material, die Fertigung, den Einbau, die Funktion und auch an die Auswertung der von den Messgeräten erfassten Verbrauchswerte gestellt werden. Auch gibt die genannte Norm Prüfverfahren an, welche die Erfüllung der aufgestellten Anforderungen kontrollieren und legt auch Richtlinien für die Art und Umfang der Durchführung fest. Die Norm fordert hierbei auch die Einheitlichkeit der Heizkostenverteiler innerhalb einer Abrechnungseinheit. Dies bedeutet, dass nur Heizkostenverteiler desselben Fabrikates mit einheitlichem Bewertungssystem innerhalb einer Abrechnungseinheit zur Erfassung der Wärmeabgabe verwendet werden dürfen.

Dies hat jedoch den Nachteil, dass zur Erfüllung der Einheitlichkeit der Bewertung innerhalb einer Abrechnungseinheit vom Hersteller immer gleiche Heizkostenverteiler im Falle des Ersatz z.B. eines defekten Heizkostenverteilers vorrätig gehalten werden müssen. Auch muss der Hersteller bei Wechsel des Gerätemodells, oder bei Auslauf eines Gerätemodells immer einen Allzeitbedarf an eventuellen Ersatzgeräten vorsehen. Die Planung dieses Bedarfes an Ersatzgeräten gestaltet sich jedoch schwierig und verursacht zudem zusätzliche Lagerkosten.

EP 990882A1 offenbart ein System zur Ermittlung des Energieverbrauchs von einer Vielzahl von Verbrauchsstellen, z. B. Heizkörpern, welche Wärme von einer Heizungsanlage beziehen. An jedem Heizkörper ist eine Verbrauchsmessvorrichtung angebracht, die eine Messeinheit und eine Ableseeinheit aufweist. Die Verbrauchsmessvorrichtungen aller Verbrauchsstellen enthalten gleiche Messeinheiten und bei wenigstens zwei der Verbrauchsstellen sind Verbrauchsmessvorrichtungen mit Ableseeinheiten für verschieden Ableseverfahren vorhanden.

Aus DE 10065833 A1 ist ein parametrierbarer Sensor und ein Verfahren zur Parametrierung des Sensors bekannt. Der Sensor umfasst eine Detektionseinrichtung zur Detektion eines Beaufschlagungssignals, eine Auswerteeinrichtung zur Erzeugung eines Ausgangssignals in Abhängigkeit des detektierten Beaufschlagungssignals sowie eine oder mehrere Eingabeeinrichtungen und eine Energieversorgungseinrichtung. Der Sensor ist dadurch parametrierbar, dass die Eingabeeinrichtung bei einer Änderung in der Energieversorgung des Sensors aktiviert wird.

Die US 5,646,858 beschreibt ein System zur Ermittlung des Energieverbrauchs einer Vielzahl von Verbrauchsstellen. An jeder Verbrauchsstelle ist eine Verbrauchsmessvorrichtung angebracht, wobei die Verbrauchsmessvorrichtung gegen Manipulation bzw. Sabotage geschützt ist.

Die US 4, 455,095 beschreibt ein System zur Messung der Wärmeenergieabgabe von Raumheizungen, wobei das System wenigstens eine Eingabeeinrichtung zur selektiven Eingabe von speziellen Heizungskonstanten vorgesehen ist. Die Eingabeeinrichtung ist mit einem Rechengerät gekoppelt, dem Messwerte eines Vorlauftemperaturmessfühlers, eines Rücklauftemperaturmessfühlers und eines Raum- oder Umgebungstemperaturmessfühlers als Prozessvariable zugeführt werden. Das Rechengerät erzeugt aus den voreingestellten Heizungskonstanten sowie den im Betrieb abgetasteten Temperaturmesswerten ein über die Zeit integriertes Ausgangssignal, dass ein quantitavies Mass für die Wärmeabgabe der Heizung darstellt.

Der Erfindung liegt die Aufgabe zugrunde, ein Verfahren zur Parametrierung eines Heizkostenverteilers vorzuschlagen, welches unter Vermeidung der genannten Nachteile des Standes der Technik, die Verwendung von Heizkostenverteilern unterschiedlicher Bauart in einer Abrechnungseinheit ermöglicht.

Diese Aufgabe wird durch die im Anspruch 1 angegebenen Merkmale gelöst.

Mit anderen Worten sieht das erfindungsgemäße Verfahren im Falle des Austausches beispielsweise eines defekten Altgerätes durch ein Neugerät in einer Abrechnungseinheit eine Parametrierung des Neugerätes derart vor, dass die Arbeitsweise bzw. das Messverhalten des Neugerätes im wesentlichen mit dem des Altgerätes übereinstimmt. Dies bedeutet, dass die Arbeitsweise bzw. das Messverhalten zur Verbrauchswerterfassung des zu ersetzenden Altgerätes durch das Neugerät simuliert wird. Dieser Zusammenhang zwischen dem Alt- und dem Neugerät kann beispielsweise im Mikrokontroller des Heizkostenverteilers implementiert werden. Die Parameter bzw. Kenngrößen die die Arbeitsweise bzw. das Messverhalten zur Verbrauchswerterfassung, insbesondere den Zählbeginn und das Zählverhalten beeinflussen, werden beispielsweise im RAM des Mikrokontrollers des Heizkostenverteilers (Neugerät) als programmierbare Daten gespeichert. Der Mikrokontroller des Neugerätes simuliert somit unter Verwendung der gespeicherten Kenndaten die Arbeitsweise bzw. das Messverhalten des Altgerätes.

Anstelle eines Altgerätes kann auch ein ideales Gerät, welches beispielsweise lineare, temperaturunabhängige KC und $KC_{HI}$ aufweist, simuliert werden.

Somit kann durch das erfindungsgemäße Verfahren jeder beliebige neue Heizkostenverteiler, der ein altes oder ideales Gerät in einer Abrechnungseinheit ersetzen soll, verwendet werden. Das in der Bauart verschiedene Neugerät kann hierbei die Arbeitsweise bzw. das Verhalten des Altgerätes bzw. des idealen Gerätes unter Beachtung der normativen Anforderungen simulieren.

Das erfindungsgemäße Verfahren hat somit den Vorteil, dass im Falle des Austausches von Altgeräten in Liegenschaften diese mit neuen Geräten ausgerüstet werden können und dies unabhängig von der innerhalb einer Abrechnungseinheit vorhandenen Geräteausstattung. Dies hat den Vorteil, dass unter Beachtung der Norm DIN EN 834 durch das erfindungsgemäße Verfahren eine sachgerechte Verwendung der Heizkostenverteiler in einer Abrechnungseinheit gewährleistet ist.

Somit ist es nicht mehr notwendig, bei Auslauf eines Gerätemodells einen Allzeitbedarf an Ersatzgeräten vorusehen. Durch das erfindungsgemäße Verfahren kann somit zu jedem Zeitpunkt ein Ersatz von beispielsweise defekten Altgeräten durch die derzeit verfügbaren Ersatzgeräte erfolgen. Dadurch kann der bisher bedingte logistische Aufwand für die Lagerung von entsprechenden Altgeräten entfallen.

Weitere Vorteile der Erfindung ergeben sich anhand der nachfolgenden Beschreibung und sind Gegenstand der Ansprüche.

Figur 1 zeigt ein System zur Verbrauchswerterfassung mit mehreren elektronischen Heizkostenverteilern.

Figur 2 zeigt in einem Ablaufdiagramm ein bevorzugtes Ausführungsbeispiel des erfindungsgemäßen Verfahrens zur Parametrierung von elektronischen Heizkostenverteilern.

Figuren 3a bis 3c zeigen die Umschaltung von Zweifühlerbetrieb in Einfühlerbetrieb eines elektronischen Heizkostenverteilers.

Figur 4 zeigt das Startverhalten- und Zählverhalten eines elektronischen Heizkostenverteilers.

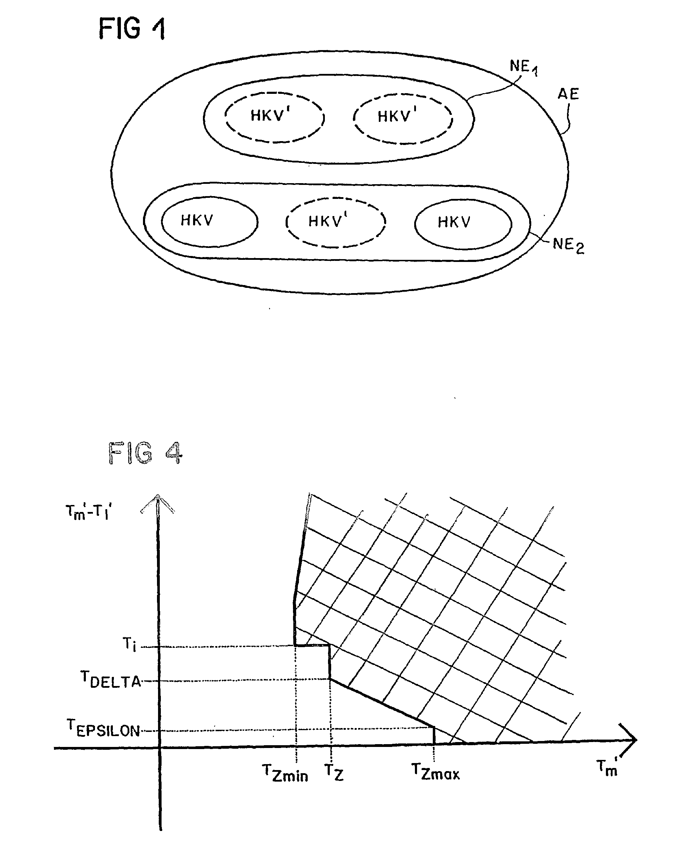

Figur 1 zeigt ein System zur Verbrauchswerterfassung mit beispielsweise zwei Nutzungseinheiten $NE_1$ und $NE_2$. Unter Nutzeinheiten sind Wohnungs-, Büro-, Geschäfts-, Gewerbe- oder Industrieräumlichkeiten zu verstehen, deren Wärmeversorgung durch eine gemeinsame Zentralheizungsanlage oder über einen gemeinsamen Fernwärmeanschluss erfolgt. Die Gesamtheit der Nutzeinheiten bildet hierbei eine Abrechnungseinheit AE. Existieren in einer Abrechnungseinheit Nutzeinheiten mit typischen Unterschieden z.B. in Form technisch unterschiedlicher Heizsysteme oder im Verbrauchsverhalten z.B. Industrieräumlichkeiten gegenüber privaten Wohnungen, so kann eine entsprechende Unterteilung der Abrechnungseinheit AE in hier nicht dargestellte Nutzergruppen erforderlich sein.

Die Nutzeinheiten $NE_1$ und $NE_2$ umfassen jeweils eine bestimmte Anzahl von Heizkostenverteilern HKV, wobei die Anzahl der einer Nutzeinheit zugeordneten Heizkostenverteiler unterschiedlich sein kann. Mit den Heizkostenverteilern HKV kann jeweils die anteilige Wärmeabgabe der hier nicht dargestellten Heizflächen in den Nutzeinheiten bezogen auf den gesamten Wärmeverbrauch der Abrechnungseinheit AE bestimmt werden.

Der Heizkostenverteiler HKV kann wie in der Norm DIN EN 834 angegeben ist, als Zweifühlergerät, Einfühlergerät mit Startfühler oder als Einfühlergerät eingesetzt werden. Der Betrieb als Einfühlergerät bzw. als Einfühlergerät mit Startfühler stellen hierbei Spezialfälle des Betriebes des Heizkostenverteilers als Zweifühlergeräte dar und werden durch das erfindungsgemäße Verfahren mitberücksichtigt.

Die durch Apostroph gekennzeichneten Heizkostenverteiler HKV', die strichliniert dargestellt sind, bezeichnen hierbei zur Ersetzung eines alten Heizkostenverteilers vorgesehene neue Heizkostenverteiler unterschiedlicher Bauart bzw. Fabrikat. Die neuen Heizkostenverteiler HKV' werden durch das erfindungsgemäße Verfahren derart parametriert, dass sie in ihrem Verhalten bzw. ihrer Arbeitsweise zur Verbrauchswerterfassung im wesentlichen mit den alten Heizkostenverteilern HKV übereinstimmen. Dies bedeutet, dass ein aufgrund unterschiedlicher Bauart bzw. Fabrikat bedingter Unterschied im Gerät in der Funktion bzw. der Arbeitsweise der Geräte für die Verbrauchswerterfassung nicht relevant ist. Dabei ist es nicht von Bedeutung, ob beispielsweise alle alten Heizkostenverteiler HKV durch neue Heizkostenverteiler HKV' in einer Nutzeinheit $NE_1$ ersetzt werden oder wie dies bei der Nutzeinheit $NE_2$ der Fall ist nur ein Heizkostenverteiler HKV durch ein neues Modell HKV' ersetzt wird. Ein Austausch eines alten Heizkostenverteilers durch ein entsprechend neues Gerät kann beispielsweise im Fall eines defekten Altgerätes erfolgen, wie dies in der Nutzeinheit $NE_2$ gezeigt ist. In der Nutzeinheit $NE_1$ werden im Unterschied hierzu sämtliche alten Heizkostenverteiler durch entsprechende neue Geräte (HKV') ersetzt. Das erfindungsgemäße Verfahren erlaubt somit an beliebiger Stelle innerhalb einer Abrechnungseinheit einen Austausch von alten durch neue Geräte vorzunehmen. Selbstverständlich gilt dies auch bei einer entsprechenden Unterteilung einer Abrechnungseinheit in Nutzergruppen, die hier nicht dargestellt sind.

In der nachfolgenden Beschreibung des erfindungsgemäßen Verfahrens werden die das Altgerät (HKV) in der Arbeitsweise und Messverhalten charakterisierenden Kenngrößen durch das vorgestellte Attribut "virtuell" gekennzeichnet. Diese virtuellen Kenngrößen werden von dem Neugerät (HKV') simuliert und dienen der Anpassung der Arbeitsweise bzw. des Messverhaltens des Neugerätes an das Altgerät. Der aufgrund unterschiedlicher Bauart bzw. Fabrikat bedingte Unterschied zwischen Alt- und Neugerät ist somit im Hinblick auf die relevanten Kenngrößen für die Verbrauchswerterfassung nicht mehr vorhanden. Die in der nachfolgenden Beschreibung angegebenen Kenngrößen erhalten hierbei ein Apostroph als Kennzeichen dafür, dass sie die virtuellen Kenngrößen des zu simulierenden Altgerätes und nicht die z.B. bei der Initialisierung eines Neugerätes normalerweise ursprünglich verwendeten Größen bezeichnen.

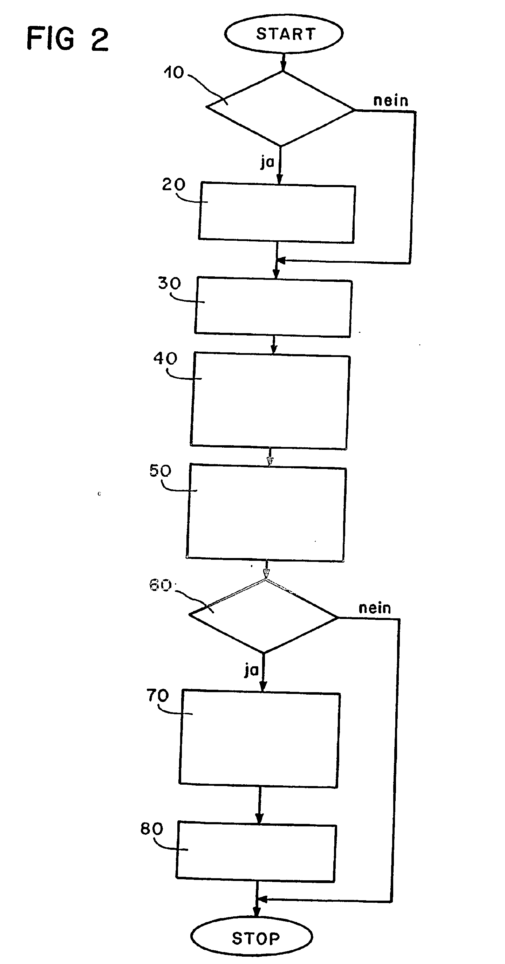

Figur 2 zeigt in einem Ablaufdiagram das erfindungsgemäße Verfahren zur Parametrierung eines Heizkostenverteilers. Der Übersichtlichkeit wegen werden die einzelnen Blöcke 10 - 80 zunächst einmal kurz erläutert. Diese werden dann anschließend detailliert Block für Block beschrieben. In Block 10 erfolgt eine Abfrage, ob eine mathematische Transformation der Temperatur des heizkörperseitigen Fühlers $T_{HF}$ und der Temperatur des raumseitigen Fühlers $T_{RF}$ in die entsprechenden virtuellen Fühlertemperaturen $T_{HF}'$ und $T_{RF}'$ erfolgen soll. Wenn dies der Fall ist, erfolgt in Block 20 die Berechnung der virtuellen Fühlertemperaturen $T_{HF}'$ und $T_{RF}'$. In Block 30 wird die Berechnung der virtuellen Umgebungstemperaturen, d.h. der virtuellen Raumlufttemperatur $T_l'$ und virtuellen mittleren Heizmediumstemperatur $T_{Mm}'$ durchgeführt. In Block 40 erfolgt die Korrektur der in Block 30 berechneten virtuellen Umgebungstemperaturen unter Berücksichtigung des Überganges von Zweifühler- in Einfühlerbetrieb. Als Ergebnis der Korrektur werden die korrigierten virtuellen Umgebungstemperaturen $T_l''$ und $T_m''$ erhalten. In Block 50 werden beispielsweise aus den Fühlertemperaturen $T_{HF}$ und $T_{RF}$ und den virtuellen Umgebungstemperaturen $T_m'$ und $T_l'$ die Startbedingungen generiert. Im Abfrageblock 60 wird überprüft, ob die entsprechend der vorgenommenen Parametrierung erhaltenen Startbedingungen erfüllt sind. Ist dies der Fall, so erfolgt die Energieberechnung innerhalb einer durch die Startbedingungen definierten Parameterebene für den Heizkostenverteiler. Dies ist als Block 70 dargestellt. Anschließend wird im Block 80 die berechnete Energie als aufsummierter Zählfortschritt als Anzeigewert ausgegeben.

**Berechnung der virtuellen Fühlertemperaturen**

Im folgenden Ausführungsbeispiel wird die Parametrierung eines Heizkostenverteilers ausgehend von den Fühlertemperaturen $T_{HF}$ und $T_{RF}$ erläutert.

Die Berechung der virtuellen Fühlertemperaturen $T_{HF}'$ und $T_{RF}'$ ist optional hat jedoch den Vorteil, dass die Fühlertemperaturen einfach messbar sind und zwischen den Fühlertemperaturen des Altgerätes (HKV) und des Neugerätes (HKV') ein einfacher Zusammenhang besteht, der zum Beispiel mathematisch einfach darstellbar ist. Dieser Zusammenhang kann beispielsweise im Mikrocontroller des Neugerätes (HKV') wie folgt implementiert werden.

$$T_{HF}' = A_{HF} + B_{HF} * T_{HF} + C_{HF} * T_{HF}^2 \tag{1}$$

$$\Delta T = T_{HF} - T_{RF} \tag{2}$$

$$\Delta T' = A_{\Delta T} + B_{\Delta T} * \Delta T + C_{\Delta T} * \Delta T^2 \tag{3}$$

$$T_{RF}' = T_{HF}' - \Delta T' \tag{4}$$

Die gesuchten Größen $A_{HF}$, $B_{HF}$, $C_{HF}$, $A_{\Delta T}$, $B_{\Delta T}$ und $C_{\Delta T}$ werden hierbei für Heizkörpergruppen als repräsentativ angenommen und dienen der Anpassung des Neugerätes an das Altgerät bzw. an ein ideales Gerät.

Aus den Messungen zum Beispiel für drei Arbeitspunkte des Neugerätes, z. B. bei 10K, 30K und 60K Übertemperatur können die virtuellen Fühlertemperaturen für das zu simulierende Altgerät wie folgt hergeleitet werden.

$$
\begin{aligned}
T_{HF}'(1) &= A_{HF} + B_{HF} * T_{HF}(1) + C_{HF} * T_{HF}(1)^2 \\
T_{HF}'(2) &= A_{HF} + B_{HF} * T_{HF}(2) + C_{HF} * T_{HF}(2)^2 \\
T_{HF}'(3) &= A_{HF} + B_{HF} * T_{HF}(3) + C_{HF} * T_{HF}(3)^2
\end{aligned}
\tag{5}
$$

Die Gleichungen für die virtuellen Temperaturdifferenzen $\Delta T'$ zwischen angenommenem heizkörperseitigem

und angenommenem raumseitigem Fühler erhält man aus Gleichung (3) wie folgt.

$$\Delta T'(1) = A_{\Delta T} + B_{\Delta T} * \Delta T(1) + C_{\Delta T} * \Delta T(1)^2$$

$$\Delta T'(2) = A_{\Delta T} + B_{\Delta T} * \Delta T(2) + C_{\Delta T} * \Delta T(2)^2 \qquad (6)$$

$$\Delta T'(3) = A_{\Delta T} + B_{\Delta T} * \Delta T(3) + C_{\Delta T} * \Delta T(3)^2$$

Die Gleichungen (5) und (6) werden nach den gesuchten Größen $A_{HF}$, $B_{HF}$, $C_{HF}$, $A_{\Delta T}$, $B_{\Delta T}$ und $C_{\Delta T}$ gelöst. Stehen mehr Messpunkte zur Verfügung, so kann auch eine Lösung dieser Gleichungen durch die Methode der kleinsten Fehlerquadrate erfolgen. $A_{\Delta T}$, $B_{\Delta T}$ und $C_{\Delta T}$ beschreiben ein nichtlineares KC, $A_{HF}$, $B_{HF}$ und $C_{HF}$ stehen für $KC_{HF}$ wenn z.B. die Raumlufttemperatur als näherungsweise konstant angenommen wird. Die Nichtlinearität der C-Werte kann im Falle eines idealen Gerätes bzw. einer idealen Kombination Heizkostenverteiler - Heizkörper eliminiert werden, so dass die Berechnung mit temperaturunabhängigen C-Werten erfolgen kann, was zu geringeren Fehlern bei der Berechnung führt.

Damit wird ein Austausch von nachfolgenden Gerätegenerationen noch einfacher möglich. Dadurch werden keine unterschiedlichen Geräteeigenschaften mehr existieren. Somit kann unabhängig von dem Fabrikat bzw. von der Bauart des Heizkostenverteilers ein ideales Gerät simuliert werden, das einfach austauschbar ist.

Im allgemeinen wird ein Polynom für die Korrektur der Temperaturdifferenz ein $A_{\Delta T}$ kleiner/größer Null haben, d.h. eine gemessene Temperaturdifferenz von Null wird zu einer berechneten virtuellen Temperaturdifferenz ungleich Null. Aus diesem Grund wird die Temperaturdifferenz in zwei Teilbereiche zerlegt. Für beide Teilbereiche kann z. B. ein eigenes Polynom zur Transformation der realen Fühlertemperaturen in virtuelle Fühlertemperaturen benutzt werden. Im Teilbereich, in dem die Temperaturdifferenz Null enthalten ist, wird eine Nullstelle bei $\Delta T =$ Null erzwungen indem das $A_{\Delta T}$ dieses Teilbereiches auf Null gesetzt wird.

Negative Temperaturdifferenzen treten im Heizkostenverteiler im allgemeinen nicht auf. Für negative Temperaturdifferenzen zwischen den Fühlern werden zwei Vereinfachungen für die Berechnung der virtuellen Fühlertemperaturen vorgenommen $\Delta T' = \Delta T$ oder $\Delta T =$ Null.

**Berechnung der virtuellen Lufttemperatur $T_l'$ und der virtuellen mittleren Heizmediumtemperatur $T_m'$**

Die folgende Berechnung der virtuellen Lufttemperatur und der virtuellen mittleren Heizmediumtemperatur werden hier z.B. mit den Fühlertemperaturen $T_{HF}$ und $T_{RF}$ durchgeführt. An Stelle dieser Größen können aber auch die virtuellen Fühlertemperaturen $T_{HF}'$ und $T_{RF}'$ verwendet werden.

Für die Berechnung der virtuellen Raumtemperatur wird die Ankopplung des heizkörperseitigen Fühlers $T_{HF}$ an die mittlere Heizmitteltemperatur wie folgt definiert

$$C_{HF} = 1 - \frac{T_{HF} - T_l}{T_m - T_l} \qquad (7)$$

$$KC_{HF} = \frac{1}{1 - C_{HF}} = \frac{T_m - T_l}{T_{HF} - T_l} \qquad (8)$$

Die Ankopplung beider Fühler $T_{HF}$ und $T_{RF}$ an die Differenz zwischen mittlerer Heizmitteltemperatur und Raumtemperatur wird wie folgt definiert.

$$C = 1 - \frac{T_{HF} - T_{RF}}{T_m - T_I} \qquad (9)$$

$$KC = \frac{1}{1 - C} = \frac{T_m - T_I}{T_{HF} - T_{RF}} \qquad (10)$$

Aus Gleichung (8) erhält man

$$T_m - T_I = KC_{HF} * (T_{HF} - T_I) \qquad (11)$$

Aus Gleichung (10) erhält man

$$T_m - T_I = KC * (T_{HF} - T_{RF}) \qquad (12)$$

$$KC * (T_{HF} - T_{RF}) = KC_{HF} * (T_{HF} - T_I) \qquad (13)$$

Aus Gleichung (13) erhält man unmittelbar die Gleichung

$$T_I' = T_{HF} - \frac{KC}{KC_{HF}} * (T_{HF} - T_{RF}) \ , \qquad (14)$$

mit der man eine virtuelle Raumtemperatur $T_I'$ bestimmen kann.
Die virtuelle mittlere Heizmediumstemperatur $T_m'$ erhält man zu

$$T_m' = KC_{HF} * (T_{HF} - t_I') + t_I' \qquad (15)$$

**Korrektur der virtuellen Raumtemperatur $T_I'$ und der mittleren Heizmediumstemperatur $T_m'$**

Im folgenden wird die Korrektur der virtuellen Raumtemperatur $T_I'$ und der mittleren Heizmediumstemperatur $T_m'$ erläutert. Bei sehr kleiner Temperatur des raumseitigen Messwertaufnehmers, sehr großer Temperatur des heizkörperseitigen Messwertaufnehmers und schwacher Ankopplung des raumseitigen Messwertaufnehmers kann es trotz positiver Fühlertemperaturen dazu kommen, dass eine negative virtuelle Raumtemperatur vom Mikrocontroller berechnet wird. Für diesen Fall wird z. B. eine virtuelle Raumtemperatur von Null angenommen. Das führt zwar zu einer Abweichung der vom Mikrocontroller berechneten Werte von den Sollwerten jedoch nur in einem Bereich, der praktisch nicht durchfahren wird und damit für die weitere Berechnung nicht relevant ist.

Eine Manipulation des Heizkostenverteilers beispielsweise durch einen Wärmestau könnte zur Erhöhung der virtuellen Raumtemperatur führen. Damit verbunden wäre eine Minderanzeige. Um die Forderungen der DIN EN 834 dennoch zu erfüllen, wird z.B. eine maximale Raumtemperatur

$$T_{Lmax} = T_L + 5K \quad \text{festgelegt.}$$

Überschreitet die virtuelle Raumtemperatur die maximale Raumtemperatur $T_{Lmax}$, dann kann mit der Bezugs-Lufttemperatur gerechnet werden, d.h. es wird auf den Einfühlerbetrieb umgeschaltet.

Die maximale Raumtemperatur $T_{Lmax}$ zur Absicherung gegen Manipulation bedingt eine Korrektur der virtuellen Raumtemperatur $T_I'$ als deren Ergebnis die korrigierte virtuelle Raumtemperatur $T_I''$ erhalten wird. Diese wird der nachfolgend beschriebenen Energieberechnung zugrundegelegt.

Die Korrektur der virtuellen Raumtemperatur $T_I'$ kann jedoch nicht mit einem geschlossenen mathematischen Ausdruck beschrieben werden. Daher werden fallweise unterschiedliche Korrekturen vorgesehen.

$$T_I' <= T_{Lmax} \tag{16}$$

$$T_I'' = T_I'$$

Liegt die virtuelle Raumtemperatur unterhalb der maximalen Raumtemperatur, dann wird diese nicht korrigiert.

$$T_{Lmax} < T_I' < T_{Lmax} + \Delta T_{LSW} \tag{17}$$

$$T_I'' = T_{Lmax} + \Delta T_{LSW} - T_I' + T_L$$

Liegt die virtuelle Raumtemperatur im Bereich zwischen der maximalen Raumtemperatur und der um $\Delta T_{LSW}$ erhöhten maximalen Raumtemperatur, dann wird die korrigierte virtuelle Raumtemperatur $T_I''$ so berechnet, dass sie beim Durchfahren dieses Bereiches linear von der maximalen Raumtemperatur auf die Bezugs-Lufttemperatur abfällt.

$$T_I' >= T_{Lmax} + \Delta T_{LSW} \tag{18}$$

$$T_I'' = T_L$$

Liegt die virtuelle Raumtemperatur mehr als $\Delta T_{LSW}$ über der maximalen Raumtemperatur, dann wird die korrigierte virtuelle Raumtemperatur mit dem Wert der Bezugs-Lufttemperatur gefüllt.

Die korrigierte virtuelle mittlere Heizmitteltemperatur $T_m'$ erhält man aus der Gleichung

$$T_m'' = KC_{HF} * (T_{HF} - T_I'') + T_I'' \qquad\qquad (19)$$

**Umschaltung von Zweifühlerbetrieb in Einfühlerbetrieb**

Im folgenden wird die Umschaltung von Zweifühlerbetrieb in Einfühlerbetrieb bei unterschiedlichen Bedingungen der Raumlufttemperatur beschrieben.

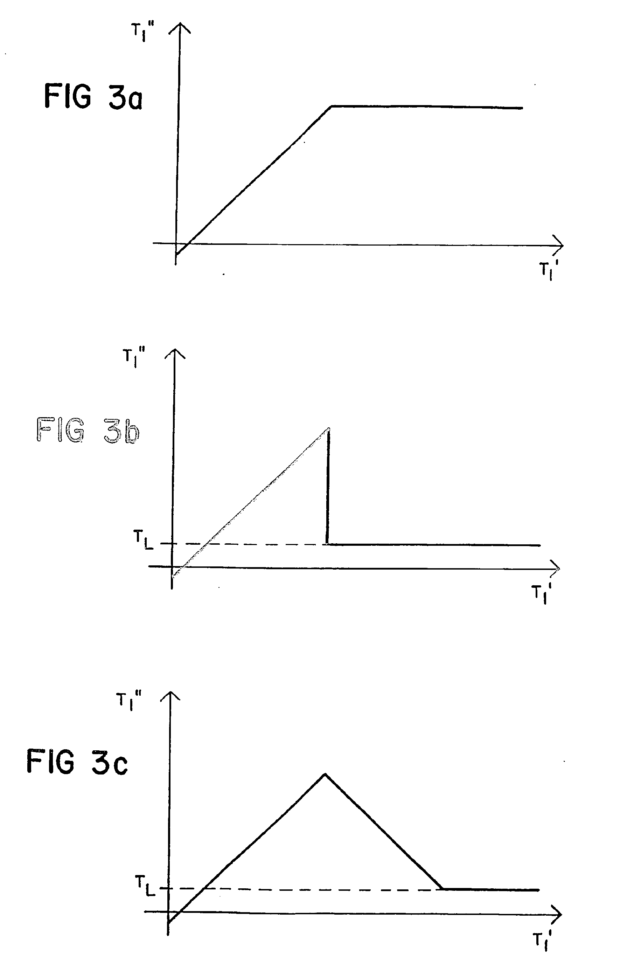

Die Geräte sollen gemäss der Norm oberhalb der maximalen Raumtemperatur $T_{Lmax}$ z. B. bei 25°C vom Zweifühlerbetrieb in den Einfühlerbetrieb umschalten. Folgende in den Fig. 3a-3c dargestellte Verfahrensweisen sind möglich.

Bei der in Fig. 3a gezeigten Variante bleibt die korrigierte Raumlufttemperatur $T_I'$ konstant und bei dem in Fig 3b dargestellten Beispiel wird die korrigierte Raumtemperatur auf die Bezugslufttemperatur von 20°C gesetzt.

Gemäss Figur 3c wird die korrigierte Raumtemperatur nach den Regeln der Fuzzylogik innerhalb eines Übergangsbereiches zum Umschalten zwischen Zweifühler- und Einfühlerbetrieb gleitend auf die Bezugs Lufttemperatur von 20°C gesetzt.

Dadurch wird vermieden, dass die Rechnung für den Einfühlerbetrieb und für den Zweifühlerbetrieb an der Nahtstelle unterschiedliche Ergebnisse bringt. Beispielsweise könnte eine sehr kleine Parameteränderung zu einer großen Differenz im Zählfortschritt und damit in der Energieberechung führen. Um dies zu vermeiden wird ein weicher Übergang zwischen der Zweifühler- und der Einfühlerberechnung vorgesehen.

Indem das Verhalten auch im Übergangsbereich Zweifühler- zu Einfühlerbetrieb parametrierbar gemacht wird, ist es möglich, das Verhalten aller Geräte zu simulieren.

**Generierung der Startbedingungen**

Die Anforderungen an die Arbeitsweise des Heizkostenverteilers werden gemäss der Norm DIN EN 834 beispielsweise in Abhängigkeit von der mittleren Heizmitteltemperatur $T_m$ und der Raumtemperatur $T_I$ definiert, wobei der C-Wert als Ausdruck für den Grad der thermischen Ankopplung der Temperatursensoren an die zu erfassenden Temperaturen dient. Bei Kenntnis des C-Wertes der Messwertaufnehmer kann ausgehend von den gemessenen Temperaturen für den heizkörperseitigen- bzw. raumseitigen Sensor die Raumtemperatur $T_I$ und die mittlere Heizmediumtemperatur $T_m$ berechnet werden.

Die in Figur 4 dargestellte Parameterebene zeigt die Arbeitsweise eines Heizkostenverteilers. Zur Darstellung werden beispielsweise die virtuelle Raumtemperatur $T_I'$ und die virtuelle Heizmitteltemperatur $T_m'$ verwendet. Diese sind in erster Näherung identisch mit den entsprechenden Temperaturen $T_I$ und $T_m$ eines Altgerätes und lassen sich wie folgt aus den Größen $T_m$ und $T_I$ ermitteln. Die in Figur 4 gewählte Darstellung der Charakteristik eines elektronischen Heizkostenverteilers erlaubt auch eine Abbildung für verschiedene Heizkörpertypen und Montagearten des Heizkostenverteilers.

Das Start- und Zählverhalten eines elektronischen Heizkostenverteilers wird beispielsweise durch die auch in der nachfolgenden Tabelle angegebenen Parameter $T_{ZMIN}$, $T_Z$, $T_{ZMAX}$, Ti, $T_{DELTA}$ und $T_{EPS}$ definiert.

Diese Parameter, welche die Startbedingungen festlegen, formen beispielsweise einen Polygonzug in der Parameterebene, wie dies in Figur 4 dargestellt ist. Die Y-Achse wird z.B. durch die virtuelle mittlere Heizmitteltemperatur $T_m'$ und die X-Achse wird als Temperaturdifferenz der virtuellen mittleren Heizmitteltemperatur und der virtuellen Raumtemperatur $T_m' - T_I'$ gebildet.

Durch das Einsetzen von Extremwerten z.B. 0° oder sehr hoher Temperaturwerte z.B. 120° kann die Wirksamkeit einiger Parameter so gestaltet werden, dass die damit gesteuerte Startbedingung immer oder nie wahr wird. Damit ist es möglich, die Startbedingungen aller bekannten Altgeräte durch die Neugeräte zu simulieren. Der Zusammenhang zwischen dem Altgerät und dem Neugerät kann beispielsweise im Mikrokontroller des Heizkostenverteilers, z.B. in einem programmierbaren Speicher implementiert werden.

In dem schraffierten Bereich der Figur 4 wird die Energie berechnet und aufsummiert. Die Begrenzung dieses Arbeitsbereiches erfolgt durch die nachfolgenden Startbedingungen. Das Gerät berechnet beispielsweise die Energie wenn mindestens eine der folgenden Startbedingungen erfüllt ist.

$$T_m' - T_I' > T_i \qquad \text{und} \quad T_m' > T_{Zmin} \qquad\qquad (20)$$

oder

$$T_m' > T_{Zmax} \tag{21}$$

oder

$$T_m' > T_Z \quad und \quad T_m' - T_I' > T_{DELTA} + (T_m' - T_Z)/(T_{Zmax} - T_Z) * (T_{DELTA} - T_{EPS}) \tag{22}$$

Die Startbedingungen für den Zählbeginn können alternativ auch von den virtuellen Fühlertemperaturen, z.B. von $T_{HF}'$ erhalten werden. Das Gerät berechnet in diesem Fall die Energie wenn mindestens eine der folgenden Bedingungen erfüllt ist.

$$T_{HF}' > T_{Zmin} \quad und \quad T_m' - T_I' > T_i \tag{23}$$

oder

$$T_{HF}' > T_{Zmax} \tag{24}$$

Damit ist es möglich, die Startbedingungen verschiedener Geräte zu simulieren.

**Berechnung der Energie bzw. des Zählfortschritts**

Im folgenden wird die Energieberechnung beschrieben, wobei für die Berechnung der Energie bzw. des Zählfortschrittes eine Temperaturdifferenz als Grundlage angenommen wird. Die Temperaturdifferenz kann beispielsweise sein:
virtuelle Heizmediumstemperatur minus virtuelle Raumlufttemperatur ($T_m' - T_I'$), korrigierte virtuelle Heizmediumstemperatur minus korrigierte virtuelle Raumlufttemperatur($T_m'' - T_I''$), virtuelle Heizmediumstemperatur minus korrigierte virtuelle Raumlufttemperatur ($T_m' - T_I''$), virtuelle Heizmediumstemperatur minus Bezugs-Lufttemperatur ($T_m' - T_L$), Temperatur des heizkörperseitigen Fühlers minus Temperatur des raumseitigen Fühlers ($T_{HF} - T_{RF}$) oder Temperatur des heizkörperseitigen Fühlers minus Bezugs-Lufttemperatur ($T_{HF} - T_L$).
Der K-Wert wird dann hierbei unterschiedlich interpretiert z. B. als Heizkörpernennleistung oder als eine mit alternativer Montage-Bewertung korrigierte Heizkörpernennleistung oder als Gesamtbewertungsfaktor.
Wie aus der nachfolgenden Berechnung der Heizkörperleistung ersichtlich ist, wird die Heizkörperleistung aus der Temperaturdifferenz hoch Exponent berechnet. Der Exponent liegt z.B. zwischen 1 und 1,5. Üblicherweise wird diese Rechnung in einem Heizkostenverteiler durch ein Table-look-up-Verfahren durchgeführt. Damit wäre jedoch nur ein fester Exponent möglich. Durch Benutzung des CORDIC-Algorithmus ist es jedoch möglich, eine Exponentialfunktion mit beliebigen Exponenten zu berechnen, ohne den numerischen Aufwand gegenüber der Interpolation in einer Tabelle wesentlich zu erhöhen.
Durch die freie Wahl des Exponenten und der Temperaturdifferenz ist es möglich, alle bekannten Zählfortschrittsberechnungen nachzubilden.
Bei dem in Fig. 4 dargestellten schraffierten Arbeitsbereich kann die Heizkörperleistung für einen Zweifühlerbetrieb nach folgender Formel bestimmt werden.

$$P = KQ * KA * (T_m'' - T_I'')^{EXP} \tag{25}$$

Im unschraffierten Bereich verhält sich der elektronische Heizkostenverteiler passiv.
Um Kompatibilität zu anderen Herstellern zu erreichen, kann z.B. alternativ folgende Formel zur Energieberechnung verwendet werden.

$$P = K * (T_{HF} - T_{RF})^{EXP} \qquad (26)$$

Der Gesamtbewertungsfaktor K beinhaltet z. B. die Heizkörpernennleistung, den KC-Wert und eventuell erforderliche weitere Korrekturen.
Die Berechnung der Energie erfolgt nach folgender Formel:

$$E = t * P \qquad (27)$$

Die Energie E wird z.B. in kWh erhalten, wobei die Anzeige z.B. jede kWh um einen Anzeigeschritt höher schaltet.
Bei der Arbeitsweise als Einfühlergerät mit Startfühler erhält man die Heizkörperleistung wie folgt.

$$P = KQ * KA * (T_m' - T_L)^{EXP} \qquad (28)$$

oder als alternativer Zählfortschritt

$$P = K * (T_{HF} - T_L)^{EXP} \qquad (29)$$

Bei der Temperaturdifferenz wird die Bezugs-Lufttemperatur einbezogen und nicht die korrigierte virtuelle Raumtemperatur wie beim Zweifühlerbetrieb.
Aufgrund des Wegfalls von einem Messwertaufnehmer und der größeren möglichen Toleranzen kann ein Einfühlergerät auch preiswerter produziert werden als ein Zweifühlergerät.
Die Berechnung der Energie beim Einfühlergerät ohne Startfühler ist stark vereinfacht. Aus den Werten des heizkörperseitigen Messwertaufnehmers wird die virtuelle mittlere Heizmediumstemperatur bestimmt.

$$T_m' = KC_{HF} * (T_{HF} - T_L) + T_L \qquad (30)$$

Als Startbedingung wird getestet, ob die virtuelle mittlere Heizmitteltemperatur größer oder gleich der Zählbeginntemperatur ist. Im Fall Einfühlergerät wird $T_Z$ z. B. auf 30°C festgelegt. Die Leistung wird aus den Gleichungen 28 oder Gleichungen 29 erhalten.
Die Kenngrößen oder Zustandsgrößen, die das Startverhalten und die Berechnung des Zählfortschrittes beeinflussen werden z. B. im RAM des Mikrocontrollers des Heizkostenverteilers als programmierbare Daten gespeichert. Dabei können verschiedene Startbedingungen für Sommer und Winter vorgesehen werden.
In der nachfolgenden Tabelle werden beispielhaft Wertebereiche angegeben. Die Einstellung hängt z.B. vom Heizkörper und den Einsatzbedingungen ab. Besondere Beachtung wird hierbei auf die Programmierung der Startbedingungen gelegt. Die Bedingungen der DIN EN 834 sollen hierbei erfüllt werden.

**Abschätzung der C-Werte für eine Bestimmung des Startverhaltens unbewerteter Geräte**

Nachfolgend wird die Abschätzung der C-Werte für eine Bestimmung des Startverhaltens unbewerteter Geräte beschrieben.
Ein unbewertetes Gerät ist nicht in der Lage, nur aus seinen Fühlertemperaturen die genauen Raumluft- und Mediumstemperaturen zu berechnen, um die Startbedingungen auch für kleine Auslegungsmediumstemperaturen und einem großen Bereich der C-Wert Variation einzuhalten, wenn es die eingestellten Standard-C-Werte zur Extrapolation der Fühlertemperaturen auf Raumluft- und Mediumstemperatur benutzt.
Ausschließlich für die Abschätzung der Startbedingungen ist es möglich, die geschätzten Werte $KC_{est}$ und $KC_{HFest}$ zu vergleichen. Der Zählfortschritt wird jedoch immer von den im Gerät fest eingestellten Werten $KC_{unb}$ und $KC_{HFunb}$ oder $KC_{bew}$ und $KC_{HFbew}$ abhängen.

Eine Schwierigkeit bei der Abschätzung der C-Werte besteht, dass aus nur zwei Fühlertemperaturen $T_{HF}$ und $T_{RF}$ die unbekannten Größen, KC, $KC_{HF}$, $T_m$ und $T_I$ bestimmt werden müssen.

Unter der Annahme, dass bei unterschiedlichen Betriebszuständen die Raumlufttemperatur nicht allzu stark variiert, kann man aus den für zwei Arbeitspunkte erhaltenen Messwerten auf die gesuchten Größen schließen.

Aus Gleichung 13 folgt

$$\frac{KC}{KC_{HF}} = \frac{T_{HF} - T_I}{T_{HF} - T_{RF}} \tag{28}$$

Damit kann man bei Messwerten aus zwei Arbeitspunkten die Raumlufttemperatur wie folgt berechnen.

$$T_I = \left[\frac{T_{HF}(1)}{T_{HF}(1) - T_{RF}(1)} - \frac{T_{HF}(2)}{T_{HF}(2) - T_{RF}(2)}\right] * \frac{1}{\frac{1}{T_{HF}(1) - T_{RF}(1)} - \frac{1}{T_{HF}(2) - T_{RF}(2)}} \tag{29}$$

Dieser Zusammenhang ist jedoch für die Implementierung im Mikrocontroller nur bedingt geeignet. Daher wird als Spezialfall vorzugsweise der kalte Heizkörper in der Anheizphase betrachtet.

$$T_{HF}(1) = T_{RF}(1) = T_I(1) \tag{30}$$

Dann ist $T_I$ bekannt. $KC/KC_{HF}$ wird dann durch Gl. 28 berechenbar. Die Temperaturdifferenz zwischen heizkörperseitigem und raumseitigem Temperaturfühler ist dabei ein Maß für die Steuerung des Schätzalgorithmus. Ist $T_{HF} - T_{RF} < T_{EPS}$, dann wird das $T_{HF} = T_I$ als letzte bekannte Raumlufttemperatur gespeichert. Wenn für mindestens 4 aufeinanderfolgende Messungen gilt $T_{HF} - T_{RF} < T_{EPS}$ und dann für 4 aufeinanderfolgende Messungen $T_{HF} - T_{RF} > T_{EPS}$ erfüllt ist und für die letzte Messung auch gilt $T_{HF} - T_{RF} > T_{DELTA}$, dann kann ein neues $KC/KC_{HF}$ mit Hilfe des $T_I$ als letzte bekannte gespeicherte Raumlufttemperatur berechnet werden. Der Schätzwert $KC/KC_{HF}$ wird vorzugsweise als gleitender Mittelwert weitergeführt.

$$\frac{KC}{KC_{HF}} \, round = \frac{3}{4} * \frac{KC}{KC_{HF}} \, old + \frac{1}{4} * \frac{KC}{KC_{HF}} \, calc \tag{31}$$

Die Behandlung des Schätzwertes $KC/KC_{HF}$ als gleitender Mittelwert hat den Vorteil, dass Messfehler ausgeglichen werden können.

Wird ein unbewertetes Gerät während der Montage auf dem Heizkörper doch mit einer "Vorbewertung" versehen, indem man das montierte Gerät einer beliebigen Heizkörpergruppe z. B. flache Heizplatte zuordnet, dann kann man relativ eng tolerierte Werte für $KC_{HFest}$ vorgeben.

$$KC_{est} = \frac{KC}{KC_{HF}} \text{ round} * KC_{HFest} \tag{32}$$

Tabelle der verwendeten Formelzeichen und Symbole

| Größe | Maßeinheit | Bezeichnung |
|---|---|---|
| Fühlertemperaturen | | |
| $T_{HF}$ | °C | Temperatur des heizkörperseitigen Fühlers |
| $T_{RF}$ | °C | Temperatur des raumseitigen Fühlers |
| $\Delta T$ | K | Temperaturdifferenz zwischen heizkörperseitigem und raumseitigem Fühler |
| virtuelle Fühlertemperaturen | | |
| $T_{HF}'$ | °C | virtuelle Temperatur eines angenommenen heizkörperseitigen Fühlers |
| $T_{RF}'$ | °C | virtuelle Temperatur eines angenommenen raumseitigen Fühlers |
| $\Delta T'$ | K | Temperaturdifferenz zwischen virtuellem heizkörperseitigem und virtuellen raumseitigem Fühler |
| Berechnung der virtuellen Fühlertemperaturen | | |
| $A_{HF}$ | keine | absoluter Korrekturwert für die Temperatur des heizkörperseitigen Fühlers |
| $B_{HF}$ | 1/°C | linearer Korrekturwert für die Temperatur des heizkörperseitigen Fühlers |
| $C_{HF}$ | 1/°C$^2$ | quadratischer Korrekturwert für die Temperatur des heizkörperseitigen Fühlers |
| $A_{\Delta T}$ | keine | absoluter Korrekturwert für die Temperaturdifferenz zwischen heizkörperseitigem und raumseitigem Fühler |
| $B_{\Delta T}$ | 1/K | linearer Korrekturwert für die Temperaturdifferenz zwischen heizkörperseitigem und raumseitigem Fühler |
| $C_{\Delta T}$ | 1/K$^2$ | quadratischer Korrekturwert für die Temperaturdifferenz zwischen heizkörperseitigem und raumseitigem Fühler |
| Heizkörper | | |
| KQ | W | Heizkörpernennleistung (eigentlich KQ * KA, Korrektur alternativer Anschluss) |
| $KC_{HF}$ | Keine | KC-Wert des heizkörperseitigen Fühlers |
| KC | Keine | KC-Wert (Heizkörper- und Raumluftfühler) |
| EXP | keine | Heizkörperexponent |
| Bewertung und C-Wert Abschätzung | | |
| $KQ_{unb}$ | W | Heizkörpernennleistung, unbewertetes Gerät |
| $KC_{HFunb}$ | Keine | KC-Wert des heizkörperseitigen Fühlers, unbewertetes Gerät |
| $KC_{unb}$ | Keine | KC-Wert (Heizkörper- und Raumluftfühler), unbewertetes Gerät |
| $KQ_{bew}$ | W | Heizkörpernennleistung, bewertetes Gerät |
| $KC_{HFbew}$ | Keine | KC-Wert des heizkörperseitigen Fühlers, bewertetes Gerät |
| $KC_{bew}$ | Keine | KC-Wert (Heizkörper- und Raumluftfühler), bewertetes Gerät |
| $KC_{Hfest}$ | Keine | KC-Wert des heizkörperseitigen Fühlers, geschätzt für Berechnung Startbedingung |
| $KC_{est}$ | Keine | KC-Wert (Heizkörper- und Raumluftfühler), geschätzt für Berechnung Startbedingung |

(fortgesetzt)

| Größe | Maßeinheit | Bezeichnung |
|---|---|---|
| Umgebungstemperaturen | | |
| $T_I$ | °C | Raumlufttemperatur |
| $T_m$ | °C | mittlere Heizmediumstemperatur |
| virtuelle Umgebungstemperaturen | | |
| $T_I'$ | °C | virtuelle Raumlufttemperatur |
| $T_m'$ | °C | virtuelle mittlere Heizmediumstemperatur |
| korrigierte virtuelle Umgebungstemperaturen | | |
| $T_I''$ | °C | korrigierte virtuelle Raumlufttemperatur |
| $T_m''$ | °C | korrigierte virtuelle mittlere Heizmediumstemperatur |
| Korrekturgrößen für virtuelle Umgebungstemperaturen | | |
| $T_L$ | °C | Bezugs-Lufttemperatur |
| $T_{LMAX}$ | °C | maximale Bezugs-Lufttemperatur zur Umschaltung zwischen Zweifühler- und Einfühlerbetrieb |
| $\Delta T_{LSW}$ | K | Übergangsbereich zum Umschalten zwischen Zweifühler- und Einfühlerbetrieb |
| Startbedingungen | | |
| $T_{ZMIN}$ | °C | minimale Zählbeginntemperatur. Ist $T_I$ oder $T_I' < T_{ZMIN}$ wird keine Energie aufsummiert. |
| $T_Z$ | °C | Zählbeginntemperatur, wirksam bei großen Temperaturdifferenzen |
| $T_{ZMAX}$ | °C | maximale Zählbeginntemperatur, wirksam bei kleinen Temperaturdifferenzen |
| $T_i$ | K | Zählbeginn-Temperaturdifferenz |
| $T_{DELTA}$ | K | Temperaturdifferenz, deren Unterschreitung zur Anhebung der Zählbeginntemperatur von $T_Z$ auf $T_{ZMAX}$ führt |
| $T_{EPS}$ | K | Epsilonumgebung, bei der Temperaturdifferenz<>0 immer noch als 0 gewertet wird |

**Patentansprüche**

1. Verfahren zur Parametrierung von Heizkostenverteilern, die zur Bestimmung des anteiligen Wärmeverbrauchs in Nutzeinheiten bezogen auf den gesamten Wärmeverbrauch in einer Abrechnungseinheit bzw. einer Nutzergruppe verwendet werden, wobei wenigstens ein zu parametrierender Heizkostenverteiler (HKV') zur Verwendung in der Abrechnungseinheit (AE) bereitgestellt wird und das die Parametrierung des bereitgestellten Heizkostenverteilers (HKV') in Abhängigkeit von dem innerhalb der Abrechnungseinheit für die Heizkostenverteilung verwendeten Bewertungssystem vorgenommen wird, **dadurch gekennzeichnet, dass** die Parametrierung des bereitgestellten Heizkostenverteilers (HKV') der ein unterschiedliches Fabrikat gegenüber den bisher in der Abrechnungseinheit verwendeten Heizkostenverteilern (HKV) aufweist, **dadurch** erhalten wird, dass in Abhängigkeit von dem Fabrikat des zu ersetzenden Heizkostenverteilers (HKV) oder in Abhängigkeit von einem idealen Heizkostenverteiler (HKV) die diesen jeweils in der Arbeitsweise bzw. Messverhalten zur Verbrauchswerterfassung charakterisierenden Größen dem bereitgestellten Heizkostenverteiler (HKV') als Kenngrößen für die Verbrauchswerterfassung der Abrechnungseinheit zugrunde gelegt und in diesem gespeichert werden, wodurch der parametrierte Heizkostenverteiler (HKV') ein Messverhalten bzw. eine Arbeitsweise zur Verbrauchswertbestimmung aufweist, die mit dem Messverhalten bzw. der Arbeitsweise der bisher in der Abrechnungseinheit (AE) verwendeten Heizkostenverteiler (HKV) kompatibel ist, so dass trotz Verwendung unterschiedlicher Fabrikate von Heizkostenverteilern in der Abrechnungseinheit ein einheitliches Bewertungssystem zur Verbrauchswerterfassung für die Abrechnungseinheit (AE) erhalten wird.

2. Verfahren nach Anspruch 1, **dadurch gekennzeichnet, dass** als Zustandsgrössen für den zu parametrierenden Heizkostenverteiler (HKV') wenigstens eine virtuelle Fühlertemperatur ($T_{HF}'$, $T_{RF}'$) des zu ersetzenden Heizkostenverteilers (HKV) und/oder wenigstens eine virtuelle Umgebungstemperatur ($T_l'$, $T_m'$) des zu ersetzenden Heizkostenverteilers (HKV) verwendet wird und das zur Bestimmung dieser Zustandsgrössen die gespeicherten Kenngrössen ($A_{HF}$ , $B_{HF}$ , $C_{HF}$ , $A_{\Delta T}$ , $B_{\Delta T}$ , $C_{\Delta T}$ , KC und $KC_{HF}$) verwendet werden.

3.  Verfahren nach Anspruch 2, **dadurch gekennzeichnet, dass** als virtuelle Fühlertemperatur des zu ersetzenden Heizkostenverteilers (HKV) die Temperatur eines angenommenen heizkörperseitigen Fühlers ($T_{HF}'$) oder eines angenommenen raumseitigen Fühlers ($T_{RF}'$) berechnet wird.

4.  Verfahren nach Anspruch 2, **dadurch gekennzeichnet, dass** als virtuelle Umgebungstemperatur des zu ersetzenden Heizkostenverteilers (HKV) die virtuelle Raumlufttemperatur ($T_l'$) des zu ersetzenden Heizkostenverteilers (HKV) oder die virtuelle mittlere Heizmediumstemperatur ($T_m'$) des zu ersetzenden Heizkostenverteilers (HKV) berechnet wird.

5.  Verfahren nach Anspruch 4, **dadurch gekennzeichnet, dass** die virtuelle Raumlufttemperatur ($T_l'$) des zu ersetzenden Heizkostenverteilers (HKV) und/oder die virtuelle mittlere Heizmediumstemperatur ($T_m'$) des zu ersetzenden Heizkostenverteilers (HKV) bei einer Umschaltung von Zweifühler- auf Einfühlerbetrieb des Heizkostenverteilers (HKV') korrigiert werden.

6.  Verfahren nach Anspruch 5, **dadurch gekennzeichnet, dass** die Umschaltung zwischen Zweifühler- auf Einfühlerbetrieb des Heizkostenverteilers in Abhängigkeit von der maximalen Raumtemperatur $T_{Lmax}$ vorgenommen wird.

7.  Verfahren nach Anspruch 5 oder 6, **dadurch gekennzeichnet, dass** als Korrekturgrößen für die virtuellen Umgebungstemperaturen des zu ersetzenden Heizkostenverteilers (HKV)die Bezugs-Lufttemperatur ($T_L$) und/oder die maximale Bezugs-Lufttemperatur $T_{Lmax}$ und/oder ein Temperaturübergangsbereich ($\Delta T_{LSW}$) zwischen Zweifühler- und Einfühlerbetrieb des Heizkostenverteilers verwendet werden.

8.  Verfahren nach Anspruch 2, **dadurch gekennzeichnet, dass** aus den Zustandsgrößen ($T_{HF}'$ , $T_{RF}'$ , $T_l'$ , $T_m'$) und/oder den Kenngrössen die Startbedingungen für den Zählbeginn des Heizkostenverteilers (HKV') hergeleitet werden.

9.  Verfahren nach Anspruch 8, **dadurch gekennzeichnet, dass** die Startbedingungen unter Berücksichtigung der minimalen Zählbeginntemperatur ($T_{zmin}$), und/oder der Zählbeginntemperatur ($T_z$), und/oder der maximalen Zählbeginntemperatur ($T_{zmax}$), und/oder der Zählbeginn-Temperaturdifferenz ($T_i$) und/oder der Temperaturdifferenz ($T_{DELTA}$) und/oder der Epsilonumgebung ($T_{EPS}$) hergeleitet werden.

10. Verfahren nach Anspruch 9, **dadurch gekennzeichnet, dass** die Parameter, welche die Startbedingungen festlegen in einer aus den virtuellen Umgebungstemperaturen des zu ersetzenden Heizkostenverteilers (HKV) ($T_m'$, $T_l'$) oder der virtuellen Fühlertemperaturen ($T_{HF}'$, $T_{RF}'$) des zu ersetzenden Heizkostenverteilers (HKV) für den Heizkostenverteiler (HKV') gebildeten Parameterebene einen Polygonzug formen, der den Arbeitsbereich für die Energieberechnung bzw. zur Bestimmung des Zählfortschrittes durch den Heizkostenverteiler (HKV') definiert.

11. Verfahren nach Anspruch 10, **dadurch gekennzeichnet, dass** wenn die Startbedingungen für den Zählbeginn erfüllt sind für die Berechnung der Energie bzw. des Zählfortschrittes eine Temperaturdifferenz, beispielsweise virtuelle Heizmediumstemperatur des zu ersetzenden Heizkostenverteilers (HKV) minus virtuelle Raumlufttemperatur ($T_m' - T_l'$) des zu ersetzenden Heizkostenverteilers (HKV), korrigierte virtuelle Heizmediumstemperatur des zu ersetzenden Heizkostenverteilers (HKV) minus korrigierte virtuelle Raumlufttemperatur ($T_m'' - T_l''$) des zu ersetzenden Heizkostenverteilers (HKV), virtuelle Heizmediumstemperatur des zu ersetzenden Heizkostenverteilers (HKV) minus korrigierte virtuelle Raumlufttemperatur ($T_m' - T_l''$) des zu ersetzenden Heizkostenverteilers (HKV), virtuelle Heizmediumstemperatur minus des zu ersetzenden Heizkostenverteilers (HKV) Bezugs-Lufttemperatur ($T_m' - T_L$), Temperatur des heizkörperseitigen Fühlers minus Temperatur des raumseitigen Fühlers ($T_{HF} - T_{RF}$) oder Temperatur des heizkörperseitigen Fühlers minus Bezugs-Lufttemperatur ($T_{HF} - T_L$) verwendet wird.

12. Heizkostenverteiler zur Bestimmung des anteiligen Wärmeverbrauchs in Nutzeinheiten bezogen auf den gesamten Wärmeverbrauch in einer Abrechnungseinheit, **dadurch gekennzeichnet, dass** der Heizkostenverteiler gemäss dem Verfahren nach einem der Ansprüche 1 bis 11 parametriert ist und dass die durch die Parametrierung erhaltenen Kenngrößen in einem Speicher des Heizkostenverteilers gespeichert sind und dass der Heizkostenverteiler unter Verwendung dieser Kenngrößen die Arbeitsweise bzw. das Messverhalten eines Heizkostenverteilers unterschiedlichen Fabrikates oder eines idealen Heizkostenverteilers simuliert.

**13.** Heizkostenverteiler nach Anspruch 12, **dadurch gekennzeichnet, dass** der Heizkostenverteiler eine programmierbare Logik oder einen Mikrocontroller aufweist, der unter Verwendung der gespeicherten Kenngrößen die Arbeitsweise bzw. das Messverhalten des Heizkostenverteilers unterschiedlichen Fabrikates oder des idealen Heizkostenverteilers simuliert.

**Claims**

**1.** Method for parameterizing heat cost allocators, which are used to determine the heat consumption in property units as a proportion of the total heat consumption in a billing unit or a user group, with at least one heat cost allocator (HKV') to be parameterized being provided for use in the billing unit (AE), and with the parametrization of the provided heat cost allocator (HKV') being performed as a function of the weighting system used within the billing unit for heat cost allocation, **characterized in that** the parametrization of the provided heat cost allocator (HKV'), which has a different make from the heat cost allocators (HKV) previously used in the billing unit, is obtained by the means that, depending on the make of the heat cost allocator (HKV) to be replaced or depending on an ideal heat cost allocator (HKV), the respective parameters that characterize said heat cost allocators in terms of the operating principle or measurement characteristic used for recording consumption values are assigned to and stored in the provided heat cost allocator (HKV') as parameters for consumption-value recording of the billing unit, whereby the parameterized heat cost allocator (HKV') has a measuring characteristic or operating principle for determining consumption values that is compatible with the measuring characteristic or operating principle of the heat cost allocator (HKV) previously used in the billing unit (AE), so that despite different makes of heat cost allocators being used in the billing unit, a standardized weighting system is obtained for consumption-value recording for the billing unit (AE).

**2.** Method according to Claim 1, **characterized in that** at least one virtual sensor temperature ($T_{HF}'$, $T_{RF}'$) of the heat cost allocator (HKV) to be replaced and/or at least one virtual ambient temperature ($T_l'$, $T_m'$) of the heat cost allocator (HKV) to be replaced is used as the state variables for the heat cost allocator (HKV') to be parameterized, and that the stored parameters ($A_{HF}$, $B_{HF}$, $C_{HF}$, $A_{\Delta T}$, $B_{\Delta T}$, $C_{\Delta T}$, KC and $KC_{HF}$) are used to determine these state variables.

**3.** Method according to Claim 2, **characterized in that** the temperature of an assumed heater-side sensor ($T_{HF}'$) or of an assumed room-side sensor ($T_{RF}'$) is calculated as the virtual sensor temperature of the heat cost allocator (HKV) to be replaced.

**4.** Method according to Claim 2, **characterized in that** the virtual room-air temperature ($T_l'$) of the heat cost allocator (HKV) to be replaced or the virtual mean heating-medium temperature ($T_m'$) of the heat cost allocator (HKV) to be replaced is calculated as the virtual ambient temperature of the heat cost allocator (HKV) to be replaced.

**5.** Method according to Claim 4, **characterized in that** the virtual room-air temperature ($T_l'$) of the heat cost allocator (HKV) to be replaced and/or the virtual mean heating-medium temperature ($T_m'$) of the heat cost allocator (HKV) to be replaced are corrected for a switchover from two-sensor operation to single-sensor operation of the heat cost allocator (HKV').

**6.** Method according to Claim 5, **characterized in that** the switchover between two-sensor operation and single-sensor operation of the heat cost allocator is performed as a function of the maximum room temperature $T_{Lmax}$.

**7.** Method according to Claim 5 or 6, **characterized in that** the reference air temperature ($T_L$) and/or the maximum reference air temperature $T_{Lmax}$ and/or a temperature transition region ($\Delta T_{LSW}$) between two-sensor operation and single-sensor operation of the heat cost allocator are used as the correction parameters for the virtual ambient temperatures of the heat cost allocator (HKV) to be replaced.

**8.** Method according to Claim 2, **characterized in that** the start conditions for the start of metering of the heat cost allocator (HKV') are derived from the state variables ($T_{HF}'$, $T_{RF}'$, $T_l'$, $T_m'$) and/or from the parameters.

**9.** Method according to Claim 8, **characterized in that** the minimum start-of-metering temperature ($T_{zmin}$) and/or the start-of-metering temperature ($T_z$) and/or the maximum start-of-metering temperature ($T_{zmax}$) and/or the start-of-metering temperature different ($T_i$) and/or the temperature difference ($T_{DELTA}$) and/or the epsilon neighbourhood ($T_{EPS}$) are incorporated in the derivation of the start conditions.

**10.** Method according to Claim 9, **characterized in that** the parameters that define the start conditions form a polyline in a parameter plane formed for the heat cost allocator (HKV') from the virtual ambient temperatures ($T_m$',$T_l$') of the heat cost allocator (HKV) to be replaced or from the virtual sensor temperatures ($T_{HF}$', $T_{RF}$') of the heat cost allocator (HKV) to be replaced, said polyline defining the operating region for the energy calculation or for determining the meter-reading rise by the heat cost allocator (HKV').

11. Method according to Claim 10, **characterized in that** when the start conditions for the start of metering are satisfied, a temperature difference is used for calculating the energy or the meter-reading rise, for example virtual heating-medium temperature of the heat cost allocator (HKV) to be replaced minus virtual room-air temperature of the heat cost allocator (HKV) to be replaced ($T_m$'-$T_l$'), corrected virtual heating-medium temperature of the heat cost allocator (HKV) to be replaced minus corrected virtual room-air temperature of the heat cost allocator (HKV) to be replaced ($T_m$"-$T_l$"), virtual heating-medium temperature of the heat cost allocator (HKV) to be replaced minus corrected virtual room-air temperature of the heat cost allocator (HKV) to be replaced ($T_m$'-$T_l$"), virtual heating-medium temperature minus reference air temperature of the heat cost allocator (HKV) to be replaced ($T_m$'- $T_L$), temperature of the heater-side sensor minus temperature of the room-side sensor ($T_{HF}$ - $T_{RF}$) or temperature of the heater-side sensor minus reference air temperature ($T_{HF}$ - $T_L$).

12. Heat cost allocator for determining the heat consumption in property units as a proportion of the total heat consumption in a billing unit, **characterized in that** the heat cost allocator is parameterized in accordance with the method according to any of the Claims 1 to 11, and that the parameters obtained by the parameterization are stored in a memory of the heat cost allocator, and that the heat cost allocator uses these parameters to simulate the operating principle or measurement characteristic of a heat cost allocator of a different make or of an ideal heat cost allocator.

13. Heat cost allocator according to Claim 12, **characterized in that** the heat cost allocator contains programmable logic or a microcontroller, which uses the stored parameters to simulate the operating principle or measurement characteristic of the heat cost allocator of a different make or of the ideal heat cost allocator.

**Revendications**

1. Procédé pour paramétrer des répartiteurs de frais de chauffage, qui sont utilisés pour déterminer la consommation de chaleur au prorata dans des unités utiles par rapport à la consommation de chaleur globale dans une unité de facturation respectivement un groupe d'utilisateurs, au moins un répartiteur de frais de chauffage (HKV') à paramétrer étant mis à disposition pour une utilisation dans l'unité de facturation (AE) et le paramétrage du répartiteur de frais de chauffage (HKV') mis à disposition étant effectué en fonction du système d'évaluation utilisé à l'intérieur de l'unité de facturation pour la répartition des frais de chauffage, **caractérisé en ce que** le paramétrage du répartiteur de frais de chauffage (HKV') mis à disposition, qui présente un produit fabriqué différent par rapport au répartiteur de frais de chauffage (HKV) utilisés jusqu'à présent dans l'unité de facturation, est obtenu par le fait que, en fonction du produit fabriqué du répartiteur de frais de chauffage (HKV) à remplacer ou en fonction d'un répartiteur de frais de chauffage (HKV) idéal, les grandeurs caractérisant ce répartiteur respectivement dans la façon de travailler ou le comportement de mesure pour l'enregistrement de la valeur de consommation sont prises pour base pour le répartiteur de frais de chauffage (HKV') mis à disposition comme grandeurs caractéristiques pour l'enregistrement de la valeur de consommation de l'unité de facturation et sont stockées dans celui-ci, le répartiteur de frais de chauffage (HKV') paramétré présentant un comportement de mesure respectivement une façon de travailler pour la détermination de la valeur de consommation qui est compatible avec le comportement de mesure respectivement la façon de travailler des répartiteurs de frais de chauffage (HKV) utilisés jusqu'à présent dans l'unité de facturation (AE), de sorte que, malgré l'utilisation de différents produits fabriqués de répartiteurs de frais de chauffage dans l'unité de facturation, on obtient un système d'évaluation homogène pour l'enregistrement de la valeur de consommation pour l'unité de facturation (AE).

2. Procédé selon la revendication 1, **caractérisé en ce que,** comme grandeurs d'état pour le répartiteur de frais de chauffage (HKV') à paramétrer, on utilise au moins une température de capteur ($T_{HF}$', $T_{RF}$') virtuelle du répartiteur de frais de chauffage (HKV) à remplacer et/ou au moins une température ambiante ($T_i$', $T_m$') virtuelle du répartiteur de frais de chauffage (HKV) à remplacer et **en ce que** les grandeurs caractéristiques ($A_{HF}$, $B_{HF}$, $C_{HF}$, $A_{\Delta T}$, $B_{\Delta T}$, $C_{\Delta T}$, KC et KC$_{HF}$) sont utilisées pour la détermination de ces grandeurs d'état.

3. Procédé selon la revendication 2, **caractérisé en ce que,** est calculé comme température de capteur virtuelle du répartiteur de frais de chauffage (HKV) à remplacer, la température d'un capteur ($T_{HF'}$) côté radiateur supposé ou d'un capteur ($T_{RF'}$) côté espace supposé.

**4.** Procédé selon la revendication 2, **caractérisé en ce que,** est calculée comme température ambiante virtuelle du répartiteur de frais de chauffage (HKV) à remplacer, la température d'air ambiant ($T_i$') virtuelle du répartiteur de frais de chauffage (HKV) à remplacer ou la température du milieu de chauffage ($T_m$') moyenne virtuelle du répartiteur de frais de chauffage (HKV) à remplacer.

**5.** Procédé selon la revendication 4, **caractérisé en ce que** la température d'air ambiant ($T_i$') virtuelle du répartiteur de frais de chauffage (HKV) à remplacer et/ou la température du milieu de chauffage ($T_m$') moyenne virtuelle du répartiteur de frais de chauffage (HKV) à remplacer sont corrigées dans le cas d'une commutation du mode à deux capteurs au mode à un capteur du répartiteur de frais de chauffage (HKV').

**6.** Procédé selon la revendication 5, **caractérisé en ce que** la commutation entre le mode à deux capteurs et le mode à un capteur du répartiteur de frais de chauffage est effectuée en fonction de la température ambiante $T_{Lmax}$ maximale.

**7.** Procédé selon la revendication 5 ou 6, **caractérisé en ce que,** sont utilisées comme grandeurs de correction pour les températures ambiantes virtuelles du répartiteur de frais de chauffage (HKV) à remplacer, la température d'air de référence ($T_L$) et/ou la température d'air de référence maximale $T_{Lmax}$ et/ou une plage de transition de température ($\Delta T_{LSW}$) entre le mode à deux capteurs et le mode à un capteur du répartiteur de frais de chauffage.

**8.** Procédé selon la revendication 2, **caractérisé en ce que** les conditions de démarrage pour le début du comptage du répartiteur de frais de chauffage (HKV') sont déduites des grandeurs d'état ($T_{HF}$', $T_{RF}$', Ti', $T_m$') et/ou des grandeurs caractéristiques.

**9.** Procédé selon la revendication 8, **caractérisé en ce que** les conditions de démarrage sont déduites en tenant compte de la température minimale au début du comptage ($T_{zmin}$), et/ou de la température au début du comptage ($T_z$), et/ou de la température maximale au début du comptage ($T_{zmax}$) et/ou de la différence de température au début du comptage ($T_i$) et/ou de la différence de température ($T_{DELTA}$) et/ou de l'environnement epsilon ($T_{EPS}$).

**10.** Procédé selon la revendication 9, **caractérisé en ce que** les paramètres, qui définissent les conditions de démarrage dans un plan de paramètre formé pour le répartiteur de frais de chauffage (HKV'), à partir des températures ambiantes virtuelles du répartiteur de frais de chauffage (HKV) ($T_m$', $T_i$') à remplacer ou des températures de capteur ($T_{HF'}$, $T_{RF}$') virtuelles du répartiteur de frais de chauffage (HKV) à remplacer forment un tracé polygonal qui définit la plage de travail pour le calcul d'énergie respectivement pour la détermination de l'avancement du comptage par le répartiteur de frais de chauffage (HKV').

**11.** Procédé selon la revendication 10, **caractérisé en ce que,** lorsque les conditions de démarrage sont remplies pour le début du comptage, on utilise pour le calcul de l'énergie respectivement de l'avancement du comptage une différence de température, par exemple une température virtuelle du milieu de chauffage du répartiteur de frais de chauffage (HKV) à remplacer moins la température virtuelle de l'air ambiant ($T_m$' - $T_i$') du répartiteur de frais de chauffage (HKV) à remplacer, la température virtuelle corrigée du milieu de chauffage du répartiteur de frais de chauffage (HKV) à remplacer moins la température virtuelle corrigée de l'air ambiant ($T_m$'' - $T_i$'') du répartiteur de frais de chauffage (HKV) à remplacer, la température virtuelle du milieu de chauffage du répartiteur de chauffage (HKV) à remplacer moins la température virtuelle corrigée de l'air ambiant ($T_m$' - $T_i$'') du répartiteur de frais de chauffage (HKV) à remplacer, la température virtuelle du milieu de chauffage moins la température de l'air de référence ($T_m$' - $T_L$) du répartiteur de frais de chauffage (HKV) à remplacer, la température du capteur côté radiateur moins la température du capteur ($T_{HF}$ - $T_{RF}$) côté espace ou la température du capteur côté radiateur moins la température de l'air de référence ($T_{HF}$ - $T_L$).

**12.** Répartiteur de frais de chauffage pour déterminer la consommation de chaleur au prorata dans des unités utiles par rapport à la consommation de chaleur globale dans une unité de facturation, **caractérisé en ce que** le répartiteur de frais de chauffage est paramétré selon le procédé défini selon l'une quelconque des revendications 1 à 11 et **en ce que** les grandeurs caractéristiques obtenues par le paramétrage sont stockées dans une mémoire du répartiteur de frais de chauffage et **en ce que** le répartiteur de frais de chauffage simule, en utilisant ces grandeurs caractéristiques, la façon de travailler respectivement le comportement de mesure d'un répartiteur de frais de chauffage de produits fabriqués différents ou d'un répartiteur de frais de chauffage idéal.

**13.** Répartiteur de frais de chauffage selon la revendication 12, **caractérisé en ce que** le répartiteur de frais de chauffage présente une logique programmable ou un microcontrôleur qui simule la façon de travailler respectivement le comportement de mesure du répartiteur de frais de chauffage d'un produit fabriqué différent ou du répartiteur de frais de chauffage idéal en utilisant les valeurs caractéristiques stockées.

## FIG 1

## FIG 4

FIG 2

FIG 3a

$T_I''$

$T_I'$

FIG 3b

$T_I''$

$T_L$

$T_I'$

FIG 3c

$T_I''$

$T_L$

$T_I'$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 990882 A1
- DE 10065833 A1
- US 5646858 A
- US 4455095 A